# EUROPÄISCHE PATENTSCHRIFT

(11) **EP 2 368 754 B1**
(45) Veröffentlichungstag und Bekanntmachung des Hinweises auf die Patenterteilung: **06.03.2019**
(21) Anmeldenummer: 11000262.3
(22) Anmeldetag: 14.01.2011
(51) Int. Cl.: B60N 2/888, B60N 2/862, B60N 2/865

(54) **Kopfstütze für Fahrzeugsitze**
Head support for vehicle seats
Appui-tête pour sièges de véhicules

(30) Priorität: 12.02.2010 DE 102010007942
(43) Veröffentlichungstag der Anmeldung: 28.09.2011
(73) Patentinhaber: GRAMMER AG, 92224 Amberg (DE)
(72) Erfinder: Keller, Hubert, 92224 Amberg (DE); Schlierf, Manfred, 92224 Amberg (DE); Bösl, Manuel, 92272 Freudenberg (DE); Luber, Eberhard, 92278 Illschwang (DE)
(74) Vertreter: Roche, von Westernhagen & Ehresmann

(56) Entgegenhaltungen:
- DE-B4- 10 202 598
- DE-B4- 19 951 966
- US-A1- 2010 127 548
- US-B2- 6 688 697

## Beschreibung

Die Erfindung betrifft eine Kopfstütze gemäß dem Oberbegriff des Anspruchs 1.

Eine solche Kopfstütze ist beschrieben in der DE 199 51 966 B4. Bei der Kopfstütze ist ein Polsterteil mit wenigstens zwei im Abstand voneinander angeordneten Schwenkhebeln zwischen einer Ruhelage und einer Wirklage verlagerbar und in der Wirklage arretierbar. Die Arretierung erfolgt mittels eines an einem tragstangenfesten Grundteil gehaltenen Schwenkteils. Das Schwenkteil ist mit einem Fortsatz ausgestattet, welcher in Kontakt mit dem Polsterteil steht und eine Rückbewegung des Polsterteils verhindert. Das Schwenkteil kann mit einer Rastvorrichtung in unterschiedlichen Positionen arretiert werden, wobei die Positionen des Schwenkteils unterschiedlichen Positionen des Kopfanlageteils zugeordnet sind.

In der DE 102 02 598 B4 ist eine Kopfstütze beschrieben, die ein Grundteil sowie ein gelenkig an dem Grundteil gelagertes Prallelement umfasst. Das Prallelement ist relativ zu dem Grundteil bewegbar und mittels Sperrmitteln in der eingestellten Stellung festsetzbar. Die Sperrmittel sind erfindungsgemäß von einer Schlingfeder gebildet, mittels welcher das Prallelement durch Reibschluss in der eingestellten Stellung haltbar ist.

In der DE 103 48 939 B3 ist eine Kopfstütze offenbart, die ein tragstangenfest gehaltenes Grundteil sowie ein Kopfanlageteil aufweist, welches mit einem Hebelsystem an dem Grundteil gelagert ist. Das Kopfanlageteil umfasst ein Langloch, in welchem ein Zapfen geführt ist, der einem unteren Hebel des Hebelsystems zugeordnet ist. Auf diese Weise sind unterschiedliche Bewegungsabläufe zwischen Prallelement und Grundteil möglich.

In der DE 203 21 462 U1 ist eine Kopfstütze beschrieben, wobei ein Kopfanlageteil mit oberen und unteren Lenkern an einem Basisteil bewegbar gelagert ist. Im Crashfall kann das Kopfanlageteil aus einer Grundposition nach vorne in eine durch eine Crashsperre nach hinten gesperrte Crashstellung ausfahren. Ein Rastmechanismus erlaubt darüber hinaus das Einstellen des Kopfanlageteils in unterschiedliche Komfortstellungen. Aus der jeweils eingestellten Position kann das Kopfanlageteil durch Überwindung der Haltekraft einer Rastfeder in eine andere Position bewegt werden. Die US 6688697 B2 offenbart eine Kopfstütze für Fahrzeugsitze mit einem eine Kopfanlagefläche aufweisenden Polsterträger, welcher relativ zu einem Basisteil zwischen einer Grundposition und einer Endposition bewegbar ausgebildet ist, wobei der Polsterträger einem ersten Verbindungselement eines Koppelgetriebes zugeordnet ist, wobei das erste Verbindungselement mit wenigstens einem um eine erste Schwenkachse schwenkbaren ersten Lenker und wenigstens einem um eine zweite Schwenkachse schwenkbaren zweiten Lenker ein erstes Viergelenk ausbildend an dem Basisteil gelagert ist, wobei das Koppelgetriebe mindestens ein zweites Verbindungselement umfasst welches mit dem ersten Lenker und mit dem zweiten Lenker ein zweites Viergelenk bildend schwenkbar verbunden ist.

Ausgehend von dem letztgenannten Stand der Technik ist es Aufgabe der Erfindung, eine Kopfstütze zu schaffen, die dem Sitzinsassen das Einstellen des Kopfanlageteils in unterschiedliche Positionen ermöglicht. Des Weiteren ist es Aufgabe der Erfindung, die Kopfstütze so auszubilden, dass das Kopfanlageteil auch bei hohen Belastungen der von dem Insassen auf die Kopfanlagefläche aufgebrachten Kraft standhält. Zudem ist es Aufgabe der Erfindung, eine Kopfstütze zu schaffen, die in Bezug auf die Herstellbarkeit vorteilhaft ist. Des Weiteren ist es Aufgabe der Erfindung, eine Kopfstütze zu schaffen, die einen geringen Platzbedarf sowie ein geringes Gewicht aufweist.

Die Aufgabe wird gemäß der Erfindung gelöst durch eine Kopfstütze mit den Merkmalen des Anspruchs 1.

Erfindungsgemäß weist die Kopfstütze ein tragstangenfestes Basisteil sowie eine an einem Polsterträger ausgebildete Kopfanlagefläche auf. Der Polsterträger ist relativ zu dem Basisteil bewegbar an dem Basisteil gelagert. Der Polsterträger ist mindestens einem ersten Verbindungselement eines Koppelgetriebes zugeordnet. Das erste Verbindungselement kann z.B. von dem Polsterträger gebildet sein. Das erste Verbindungselement bildet mit wenigstens einem ersten Lenker und wenigstens einem zweiten Lenker Schwenkgelenke.

Der erste Lenker und der zweite Lenker sind schwenkbar an dem Basisteil befestigt. Sowohl das zwischen dem ersten Lenker und dem Basisteil ausgebildete Schwenkgelenk, als auch das zwischen dem zweiten Lenker und dem Basisteil ausgebildete Schwenkgelenk sind relativ zu dem Basisteil fest angeordnet. Außerdem sind sowohl das zwischen dem ersten Lenker und dem ersten Verbindungselement ausgebildete Schwenkgelenk als auch das zwischen dem zweiten Lenker und dem ersten Verbindungselement ausgebildete Schwenkgelenk bezüglich dem ersten Verbindungselement fest angeordnet. Das erste Verbindungselement, der erste Lenker, der zweite Lenker und das Basisteil bilden ein Koppelgetriebe in Form eines Viergelenks, wobei das Basisteil tragstangenfest angeordnet ist.

Die Kopfstütze kann einen oder mehrere erste Lenker sowie einen oder mehrere zweite Lenker aufweisen. Jeder erste Lenker ist bezüglich des Basisteils z.B. um dieselbe geometrische erste Schwenkachse schwenkbar. Jeder zweite Lenker ist bezüglich des Basisteils z.B. um dieselbe geometrische zweite Schwenkachse schwenkbar.

Der wenigstens eine erste Lenker ist erfindungsgemäß durch mindestens ein zweites Verbindungselement mit dem mindestens einen zweiten Lenker verbunden. Das zweite Verbindungselement bildet sowohl mit dem ersten Lenker als auch mit dem zweiten Lenker ein Schwenkgelenk. Z. B. können zwei erste Lenker vorhanden sein, die jeweils mit einem zweiten Verbindungselement ein Schwenkgelenk bilden. Jedes zweite Verbindungselement kann außerdem mit einem zweiten Lenker ein Schwenkgelenk bilden. Von dem Basisteil, dem ersten Lenker, dem zweiten Lenker und dem zweiten Verbindungselement wird somit ein zweites Viergelenk gebildet.

Bei einer Belastung können Kräfte über das zweite Verbindungselement zwischen dem ersten Lenker und dem zweiten Lenker übertragen werden. Insbesondere kann eine Verformung von Teilen des Koppelgetriebes verhindert werden, wenn bei einer starken Belastung der Kopfanlagefläche große Hebelkräfte auftreten. Z.B. sind mittels des ersten Lenkers sowohl über das zwischen dem Basisteil und dem ersten Lenker ausgebildete Schwenkgelenk, als auch über eine den ersten Lenker in einer bestimmten Position arretierende Sperrvorrichtung Kräfte auf das Basisteil übertragbar. Von dem zweiten Lenker sind Kräfte über das gemeinsame Schwenkgelenk auf das Basisteil übertragbar. Aufgrund des zweiten Verbindungselements der erfindungsgemäßen Kopfstütze kann ein Kräfteausgleich von dem zweiten Hebel auf den ersten Hebel stattfinden, welcher einer Verformung des Polsterträgers und eine Überlastung der Elemente des Koppelgetriebes verhindert.

Mittels des zweiten Verbindungselements ist es möglich die bei einer Belastung durch den Sitzinsassen auf den Polsterträger aufgebrachte Kraft von dem zweiten Lenker derart in den ersten Lenker einzuleiten, dass ein Gegenmoment zu der unmittelbar von dem ersten Verbindungselement in den ersten Lenker eingeleiteten Kraft entsteht. Hierdurch können z.B. die auf die Sperrvorrichtung wirkenden Kräfte gemindert werden. Bei der Kopfstütze mit den erfindungsgemäßen Merkmalen ist ein Kräfteausgleich zwischen den Teilen des Koppelgetriebes möglich, welcher die Überlastung einzelner Teile verhindert. Mittels des zweiten, überlagerten Viergelenks ist z.B. die Ausbildung des ersten Lenkers und des zweiten Lenkers als Kunststoffteil möglich.

Außerdem ist z.B. eine Kräfteaufteilung möglich, wenn mehrere zweite Verbindungselemente vorhanden sind. Weist die Kopfstütze z.B. zwei erste Lenker und einen zweiten Lenker auf, kann ein Teil der von dem ersten Verbindungselement in den zweiten Lenker eingeleiteten Kräfte mittels mehrerer zweiter Verbindungselemente in beide erste Lenker eingeleitet werden, wobei eine Kräfteaufteilung stattfindet.

Das zweite Verbindungselement kann z.B. von einer Strebe gebildet sein, mittels welcher Druckkräfte sowie Zugkräfte zwischen dem ersten Lenker und dem zweiten Lenker übertragbar sind.

Erfindungsgemäß ist eine Bewegung des ersten Verbindungselements in der jeweils eingestellten Position mittels einer Sperrvorrichtung verhinderbar. Die Sperrvorrichtung ist zwischen einer Sperrposition und eine Löseposition bewegbar. In der Sperrposition wird eine Bewegung des ersten Verbindungselements in wenigstens eine Bewegungsrichtung des ersten Verbindungselements verhindert. In der Löseposition ist das erste Verbindungselement zwischen der Grundposition und der Endposition bewegbar.

Gemäß einer weiteren Ausführungsform ist die Sperrvorrichtung von einem Form-Richtgesperre gebildet. Auf diese Weise ist es z.B. möglich, das erste Verbindungselement in eine erste Bewegungsrichtung aus der jeweils eingestellten Position zu bewegen, wohingegen die Bewegung in eine entgegen gesetzte Bewegungsrichtung von dem Form-Richtgesperre verhindert wird, wenn sich die Sperrvorrichtung in der Sperrposition befindet. Z.B. kann das erste Verbindungselement in der Sperrposition der Sperrvorrichtung in Richtung Endposition bewegbar sein, während eine Bewegung in Richtung Grundposition von der Sperrvorrichtung verhindert wird.

Erfindungsgemäß umfasst die Sperrvorrichtung dem Basisteil zugeordnete erste Sperrmittel, welche lösbar mit zweiten Sperrmitteln in Eingriff bewegbar sind. Die Sperrvorrichtung kann z.B. bei einem Eingriff der ersten und der zweiten Sperrmittel die Bewegung des ersten Verbindungselements in wenigstens eine Richtung verhindern. Die zweiten Sperrmittel sind dem ersten und /oder dem zweiten Lenker, zugeordnet. Die ersten Sperrmittel sind z.B. bewegbar an dem Basisteil gelagert. Die ersten und/oder die zweiten Sperrmittel können z.B. zwischen der Sperrposition und der Löseposition bewegbar sein. Die ersten Sperrmittel und die zweiten Sperrmittel können z.B. kraftschlüssig und/oder formschlüssig in Eingriff bringbar sein.

Gemäß einer weiteren Ausführungsform sind die ersten Sperrmittel und/oder die zweiten Sperrmittel von einem schwenkbaren Hebel gebildet. Der Hebel kann z.B. auf einer basisteilfesten Schwenkachse gelagert sein. Durch eine geringe Bewegung können die ersten Sperrmittel und die zweiten Sperrmittel auf die Weise in Eingriff oder außer Eingriff bewegt werden. Mittels dieser Ausführungsform ist eine Ausbildung der Sperrvorrichtung möglich, die einen geringen Platzbedarf erfordert.

Gemäß einer weiteren Ausführungsform ist die Sperrvorrichtung mittels einer Betätigungsvorrichtung zwischen der Sperrposition und der Löseposition bewegbar. Z.B. kann die Sperrvorrichtung in die Sperrposition rückstellbelastet sein. Mittels der Betätigungsvorrichtung kann z.B. die Sperrvorrichtung aus der Sperrposition in die Löseposition bewegt werden.

Einer weiteren Ausgestaltung der Erfindung gemäß weist die Betätigungsvorrichtung eine Übertragungsvorrichtung auf, mittels welcher eine Bewegung eines dem Polsterträger zugeordneten Bedienelements auf das erste oder das zweite Sperrmittel übertragbar ist. Die Übertragung kann mittels der Übertragungsvorrichtung in jeder Position des Polsterträgers erfolgen.

Die Übertragungsvorrichtung weist z.B. einen schwenkbaren Hebel auf, der über einen Betätigungselement, wie z.B. eine Taste, verschwenkbar ist. Das Betätigungselement ist z.B. an dem Polsterträger befestigt. Ein Hebelarm des Hebels ist z.B. in jeder Position des Polsterträgers des Koppelgetriebes mit einem an dem Basisteil gelagerten Sperrmittel in Kontakt bewegbar. Auf diese Weise ist es möglich, die Bewegung des an dem Polsterträger befestigten Betätigungselements in jeder Position des Polsterträgers auf die Sperrvorrichtung zu übertragen.

Die oben genannte Aufgabe wird gemäß einem zweiten Aspekt der Erfindung gelöst durch eine Kopfstütze mit den Merkmalen des Anspruches 8.

Hinsichtlich der Merkmale des Oberbegriffs des Anspruchs 8 wird Bezug genommen auf die Ausführungen zu dem ersten Aspekt der Erfindung.

Das Basisteil ist fest mit zwei Tragstangenenden verbunden. Das Basisteil ist z.B. im Wesentlichen eben ausgebildet und erstreckt sich z.B. plattenförmig zwischen den Tragstangen. Erfindungsgemäß weist das Basisteil wenigstens eine Aussparung auf, welche wenigstens von einem Teilbereich des ersten Lenkers und / oder des zweiten Lenkers durchgreifbar ist. Darüber hinaus kann die Aussparung von anderen Teilen des Koppelgetriebes durchgreifbar sein. Z.B. kann an dem ersten Lenker und dem zweiten Lenker ein zweites Verbindungselement schwenkbar gehalten sein, durch welches ein zweites Viergelenk ausgebildet ist. Die Aussparung kann z.B. von dem zweiten Verbindungselement durchgreifbar sein.

Mit den erfindungsgemäßen Merkmalen kann die Kopfstütze mit einem geringen Bauraum ausgebildet werden. Die Aussparungen in dem Basisteil erlauben eine im Wesentlichen ebene Ausbildung des Basisteils. Auf diese Weise ist es möglich, eine hintere Wand des Polsterträgers in der Endposition des Polsterträgers nahe an die Tragstangenenden heranzubewegen. Der Polsterträger kann daher mit geringen Abmessungen ausgebildet sein. Insbesondere, wenn das Basisteil aus Metall, z.B. aus Blech gebildet ist, kann es große Kräfte aufnehmen. Die erfindungsgemäßen Merkmale machen zudem eine aufwändige Formgebung des Basisteils überflüssig.

Gemäß einer Ausführungsform ist das Basisteil als Metallteil, insbesondere als Stanzbiegeteil, ausgebildet. Das Basisteil ist dann in der Lage, hohe Kräfte aufzunehmen und lässt sich vorteilhaft fertigen. Bei gleicher Festigkeit weist das Basisteil bei dieser Ausführungsform z.B. verglichen mit einem Kunststoffteil ein geringes Gewicht auf.

Einer weiteren Ausführungsform gemäß sind der erste Lenker und / oder der zweite Lenker etwa kreissektorförmig ausgebildet. Entlang einer von der Schwenkachse beabstandeten Kreisbahn mit der Schwenkachse als Kreisradius sind erfindungsgemäß Sperrmittel einer Sperrvorrichtung ausgebildet, die in jeder Position des Lenkers eine Arretierung des Lenkers in wenigstens einer Bewegungsrichtung ermöglichen. Indem die zweiten Sperrmittel von der Schwenkachse beabstandet sind, wirkt die Sperrvorrichtung mit einem großen Hebelarm auf den Lenker. Die Sperrmittel können z.B. nach Art einer Stirnverzahnung an dem ersten und / oder dem zweiten Lenker ausgebildet sein.

Weitere Vorteile ergeben sich anhand eines in den Figuren dargestellten Ausführungsbeispiels. Es zeigen:
- Fig. 1: eine schematische perspektivische Darstellung der erfindungsgemäßem Kopfstütze,
- Fig. 2: eine schematische Seitenansicht der Kopfstütze, wobei ein Polsterkörper in einer Grundposition angeordnet ist,
- Fig. 3: die Kopfstütze in Anlehnung an Fig. 2, wobei der Polsterkörper in einer Endposition angeordnet ist,
- Fig. 4: eine schematische Frontansicht der Kopfstütze gemäß Ansichtspfeil IV in Fig. 2,
- Fig. 5: eine schematische perspektivische Darstellung der Kopfstütze in der Grundposition, wobei ein Polsterkörper nicht dargestellt ist,
- Fig. 6: eine schematische perspektivische rückwärtige Ansicht der Kopfstütze in der Grundposition gemäß Fig. 5,
- Fig. 7: die Kopfstütze in Anlehnung an Fig. 5 in der Endposition,
- Fig. 8: die Kopfstütze in Anlehnung an Fig. 6 in der Endposition,
- Fig. 9: eine Schnittdarstellung gemäß Schnittlinie IX-IX in Fig. 4,
- Fig. 10: die Kopfstütze in Anlehnung an Fig. 9, wobei der Polsterkörper in der Endposition angeordnet ist,
- Fig. 11: eine Schnittdarstellung gemäß Schnittlinie XI-XI in Fig. 4,
- Fig. 12: die Kopfstütze in Anlehnung an Fig. 11, wobei die Kopfanlagefläche in der Endposition angeordnet ist und
- Fig. 13: eine Ausschnittdarstellung gemäß Ausschnittlinie XIII in Fig. 11.

Eine Kopfstütze insgesamt wird in den Zeichnungen mit dem Bezugszeichen 10 bezeichnet. Gleiche Bezugszeichen in den unterschiedlichen Figuren bezeichnen auch bei Hinzufügung oder Weglassen von kleinen Buchstaben entsprechende Teile.

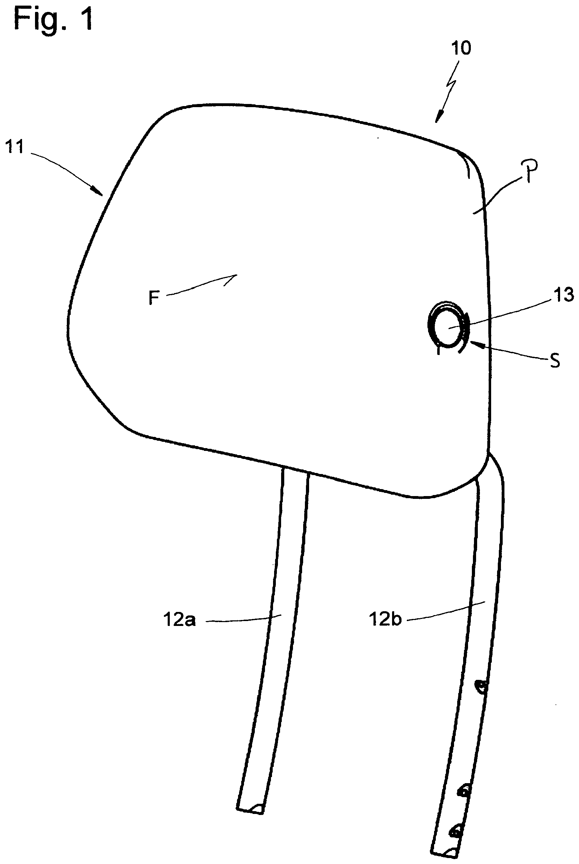

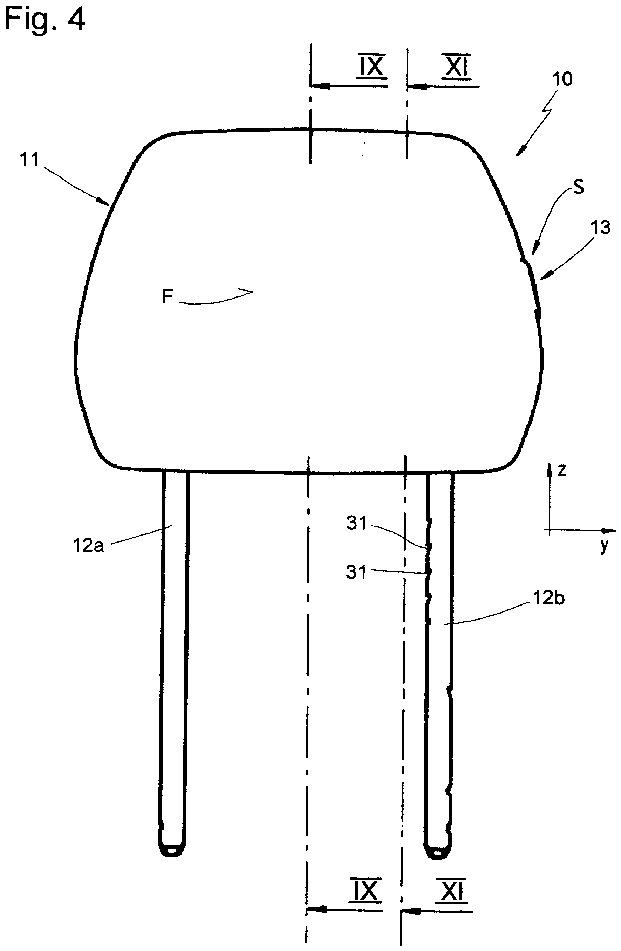

Gemäß Fig. 1 umfasst die Kopfstütze 10 einen von einem Polster P sowie einem Polsterträger 37 gebildeten Polsterkörper 11, der auf Tragstangen 12a und 12b gelagert ist. Die Tragstangen 12a und 12b sind jeweils in einem rückenlehnenfesten, nicht dargestellten Lager höhenverstellbar gelagert und können in unterschiedlichen Höhenpositionen mittels einer Arretiervorrichtung arretiert werden. Die Tragstange 12b weist mehrere Kerben 31 (in Fig. 4 dargestellt) auf, die Teil der Arretiervorrichtung sind. Die Kerben 31 wirken in nicht dargestellter Weise mit einem Rastmittel des rückenlehnenseitigen Lagers zusammen, um die Kopfstütze 10 in der eingestellten Höhenposition zu arretieren. Die Arretierung kann in bekannter Weise durch Betätigung einer Handhabe gelöst werden, um eine Höhenverstellung der Kopfstütze 10 vornehmen zu können.

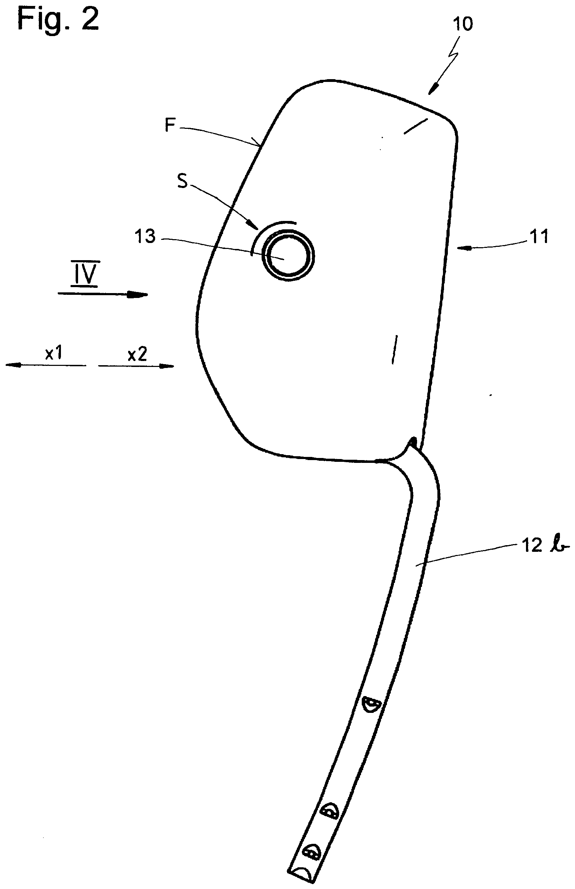

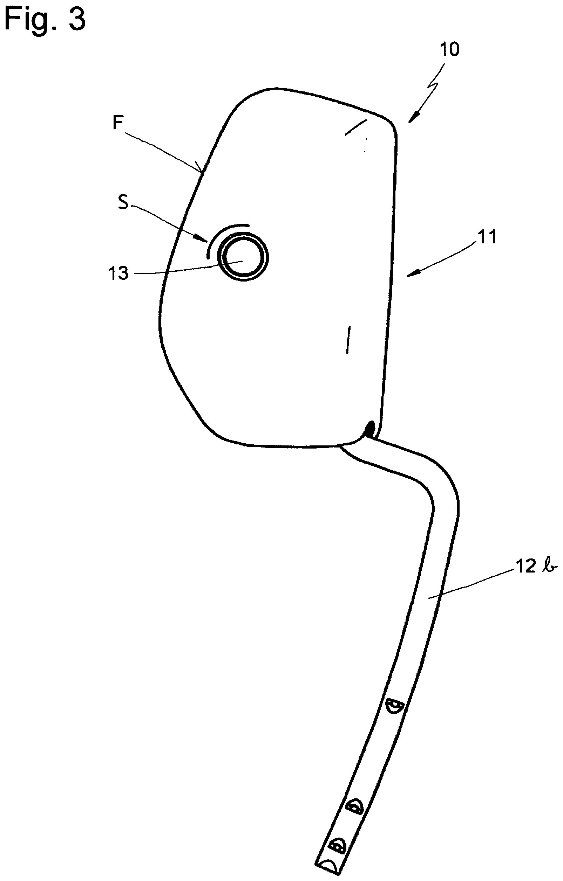

Der Polsterkörper 11 ist zwischen einer in Fig. 2 dargestellten Grundposition und einer in Fig. 3 dargestellten Endposition verstellbar. Darüber hinaus kann der Polsterkörper 10 in nicht dargestellte Positionen verstellt werden, die zwischen der Grundposition und der Endposition liegen. In der Endposition ist eine Kopfanlagefläche F des Polsterkörpers 11 bezüglich der Grundposition näher in horizontaler Richtung x1 zu dem Fahrzeuginsassen hin bewegt. Außerdem ist die Kopfanlagefläche F in der Endposition bezüglich der Grundposition nach oben in die vertikale Richtung z bewegt (die Richtung z ist in Fig. 4). Die Verstellbarkeit des Polsterkörpers 11 hat den Zweck, die Position des Polsterkörpers 11 an die Sitzposition des Sitzinsassen anzupassen und auf diese Weise sowohl einen größeren Komfort zu bieten, als auch die Verletzungsgefahr zu mindern.

Mit einer Sperrvorrichtung S wird verhindert, dass der Polsterkörper 11 sich ungewollt aus der eingestellten Position bewegt. Die Sperrvorrichtung S ist in dem vorliegenden Ausführungsbeispiel als Rastvorrichtung in Form eines Form- Richtgesperres ausgebildet und kann zwischen einer Sperrposition und einer Löseposition bewegt werden. Eine Vorwärtsbewegung des Polsterkörpers 11 in Richtung der Endposition ist in der Sperrposition der Sperrvorrichtung S möglich. Hierzu muss eine bestimmte zur Bewegung erforderliche Mindestkraft überschritten werden, die zur Überwindung der Federkraft nötig ist, welche Rastelemente der Rastvorrichtung in Eingriff hält.

Der Polsterkörper 11 kann aus der eingestellten Position erst dann in die Grundposition in Richtung x2 zurückbewegt werden, wenn eine Taste 13 betätigt wird, um die Sperrvorrichtung S in die Löseposition zu verstellen. Sobald die Taste 13 wieder gelöst ist, bewegt sich die Sperrvorrichtung S automatisch in die Sperrposition. Eine Bewegung des Polsterkörpers 11 in Richtung x2 der Grundposition ist in der Sperrposition der Sperrvorrichtung S nicht möglich.

Gemäß einer alternativen, nicht dargestellten Ausführung könnte die Sperrvorrichtung derart ausgebildet sein, dass in der Sperrposition weder eine Bewegung in Richtung x1, noch eine Bewegung in Richtung x2 möglich ist.

Der Polsterkörper 11 ist durch eine Rückstellkraft in nicht dargestellter Weise in die Grundposition belastet. Sobald die Sperrvorrichtung S in die Löseposition verstellt ist, wird der Polsterkörper 11 daher von der Rückstellkraft in die Grundposition bewegt, wenn keine der Rückstellkraft entgegen gerichtete Kraft auf den Polsterkörper 11 ausgeübt wird, welche der Rückstellkraft entspricht oder größer ist.

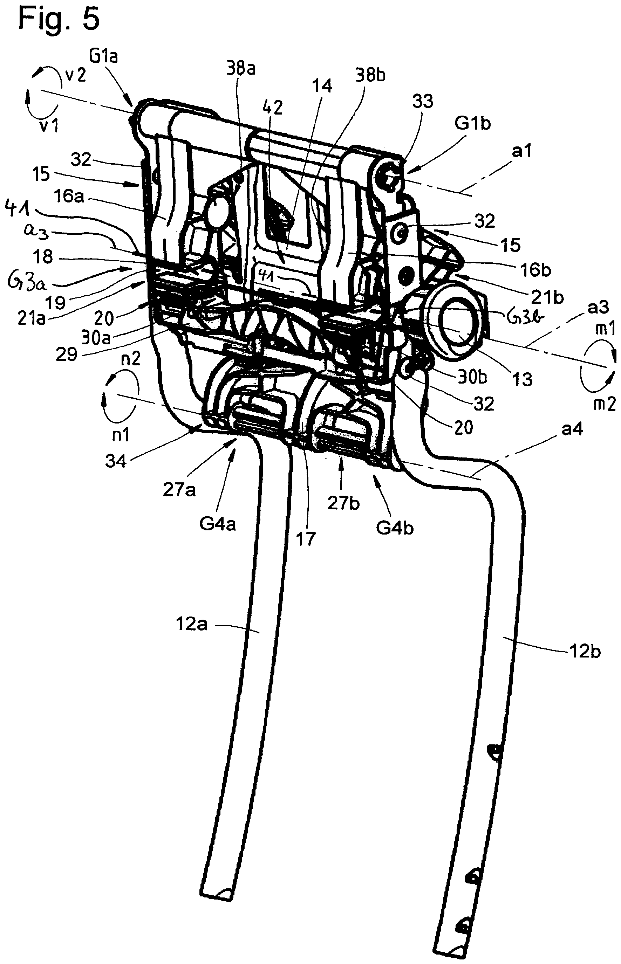

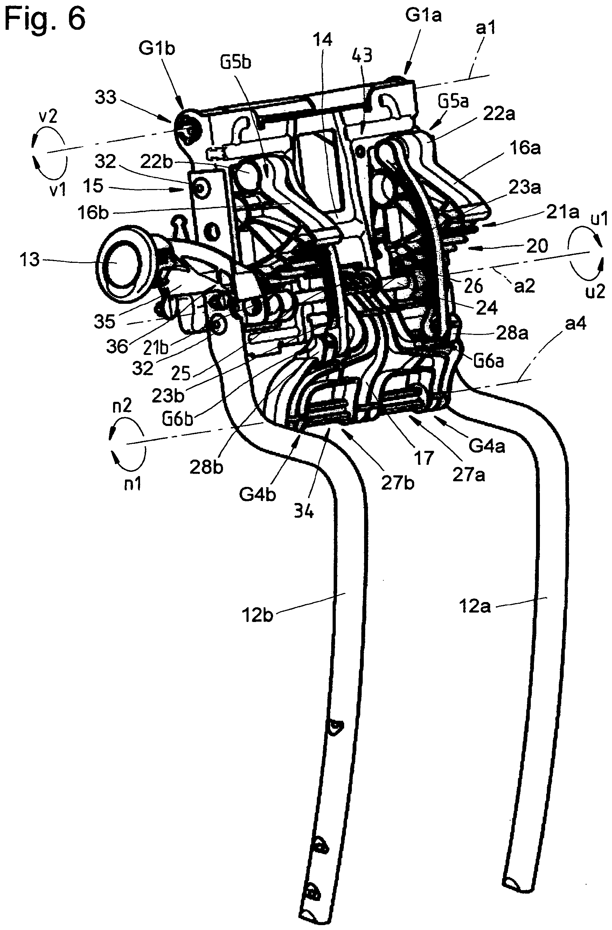

In den Fig. 5 bis 8 ist die Kopfstütze 10 ohne Polsterkörper 11 dargestellt. Ein Basisteil 14 ist an Endbereichen 15 der Tragstangen 12a und 12b befestigt. Das Basisteil 14 ist plattenförmig ausgebildet und bildet eine zwischen den Endbereichen 15 der Tragstangen 12a und 12b aufgespannte Ebene. Im vorliegenden Fall ist das Basisteil 14 als Blechformteil ausgebildet, welches durch einen Stanz-Biegevorgang geformt wurde. Die Endbereiche 15 der Tragstangen 12a und 12b sind mit Schweißverbindungen 32 mit dem Basisteil 14 fest verbunden.

Zur Lagerung des Polsterkörpers 11 vorgesehene Lenker 16a und Lenker 16b sind um eine im Wesentlichen horizontal angeordnete Schwenkachse a1 in Richtung v1, v2 schwenkbar auf einem fest mit dem Basisteil 14 verbundenen Achselement 33 gelagert. Der Lenker 16a bildet mit dem Achselement 33 ein Schwenkgelenk G1a, der Lenker 16b bildet mit dem Achselement 33 ein Schwenkgelenk G1b.

Jeder Lenker 16a und 16b ist etwa kreissektorförmig ausgebildet. Der Lenker 16a ist an einem radial von der Schwenkachse a1 abgewandten Endbereich 20 mit einer Verzahnung 21a, der Lenker 16b ist an dem radial von der Schwenkachse a1 abgewandten Endbereich 20 mit einer Verzahnung 21b versehen. Die nach Art einer Stirnverzahnung ausgebildeten Verzahnungen 21a und 21b sind Teil der Sperrvorrichtung S und dienen der bereits oben erwähnten Rastarretierung des Polsterkörpers 11 in unterschiedlichen Positionen, was weiter unten noch näher erläutert wird.

In Fig. 5 ist eine Vorderseite 42 des Basisteils 14 dargestellt. Das Basisteil 14 ist mit Aussparungen 38a und 38b versehen. Es ist erkennbar, dass der Lenker 16a die Aussparung 38a und der Lenker 16b die Aussparung 38b des Basisteils 14 durchgreift. Die Aussparungen 38a und 38b erlauben eine einfache Gestaltung des Basisteils 14 und somit auch die Konstruktion eines Polsterkörpers 11, der geringe Abmessungen aufweist. Aufgrund der Aussparungen 38a und 38b ist die im Wesentlichen ebene Ausbildung des Basisteils möglich, welche es erlaubt, eine hintere Wand 44 des Polsterträgers 37 nahe an die Tragstangenenden 15 heranzubewegen. Es ist daher möglich, den Polsterkörper 11 bezüglich seiner Ausmaße parallel zu der Bewegungsrichtung x1, x2 schmal auszubilden.

Jeder Lenker 16a und 16b umfasst einen Lagersitz 18 (siehe z.B. Fig. 5), der etwa kreiszylindrisch ausgebildet und zur schwenkbaren Lagerung eines Achsbereichs 41 des Polsterträgers 37 vorgesehen ist. Der Achsbereich 41 ist in Fig. 5 lediglich andeutungsweise dargestellt. Der Lagersitz 18 ist zur Montage des Achsbereichs 41 des Polsterkörpers 11 mit einer Öffnung 19 versehen.

Die Lenker 16a und 16b schwenken während einer Bewegung des Polsterkörpers 11 zwischen der Grundposition und der Endposition synchron, so dass Längsachsen beider Lagersitze 18 der Lenker 16a und 16b fluchten und eine Schwenkachse a3 ausbilden.

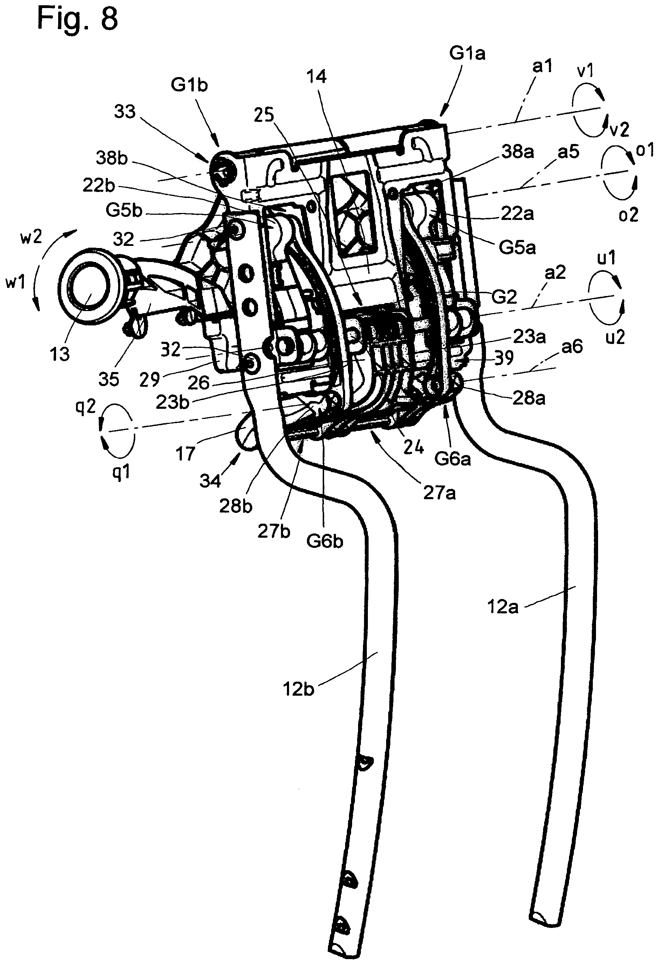

Der Lenker 16a ist zur Befestigung einer Strebe 23a (siehe z.B. Fig. 8) mit einem Lagersitz 22a versehen. Der Lenker 16a bildet mit der Strebe 23a ein Schwenkgelenk G5a mit der Schwenkachse a5. Zur Befestigung einer Strebe 23b weist der Lenker 16b einen Lagersitz 22b auf. Der Lenker 16b bildet mit der Strebe 23b ein Schwenkgelenk G5b mit der Schwenkachse a5. Die Streben 23a und 23b können mittels der Schwenkgelenke G5a und G5b relativ zu den Lenkern 16a und 16b in Richtung o1, o2 geschwenkt werden.

Z.B. in Fig. 8 ist erkennbar, dass an dem Basisteil 14 ein Achselement 24 befestigt ist. An dem Achselement 24 ist ein Lenker 17 um eine im Wesentlichen horizontal angeordnete Schwenkachse a2 in Schwenkrichtungen u1, u2 schwenkbar gelagert. Ein an einem Lagerarm 26 des unteren Lenkers 17 ausgebildeter Lagersitz 25 wird von dem Achselement 24 durchgriffen. Der Lenker 17 bildet mit dem Achselement 24 ein Schwenkgelenk G2 mit der Schwenkachse a2.

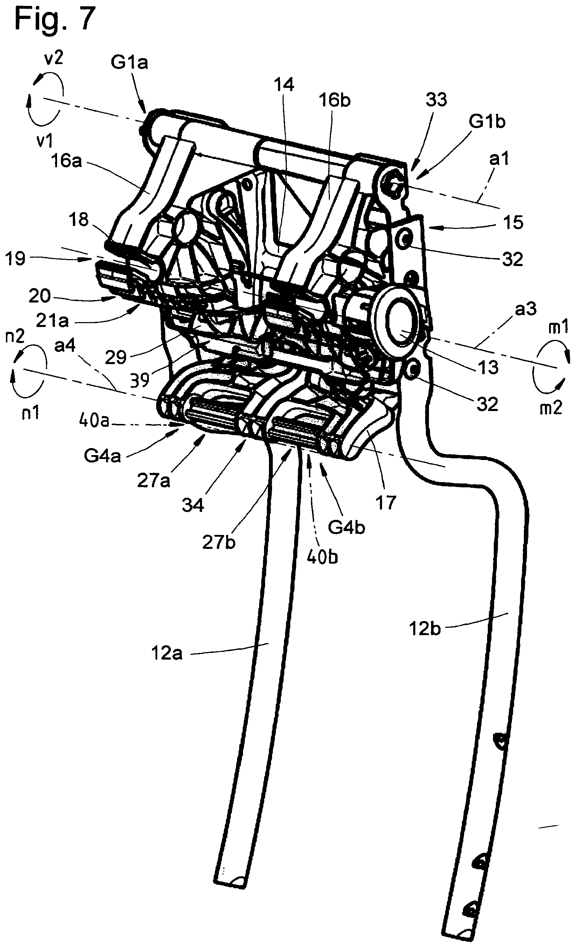

An einem radial von der Schwenkachse a2 entfernten Endbereich 34 (siehe z.B. Fig. 7) ist der untere Lenker 17 mit zwei Achsabschnitten 27a und 27b versehen, deren Längsachsen miteinander fluchten und eine Schwenkachse a4 bilden. Die Achsabschnitte 27a und 27b bilden einen Lagersitz zur Lagerung des Polsterkörpers 11. In Fig. 7 durch eine Strichlinie lediglich andeutungsweise dargestellte Lageraufnahmen 40a und 40b bilden einen Lagersitz für die Achsabschnitte 27a und 27b. Der in Fig. 7 nicht dargestellte Polsterkörper 11 ist auf diese Weise relativ zu dem Lenker 17 um die Schwenkachse a4 in Schwenkrichtungen n1,n2 schwenkbar.

An dem unteren Lenker 17 ist ein Befestigungsfortsatz 28a zur schwenkbaren Befestigung der Strebe 23a sowie ein Befestigungsfortsatz 28b zur schwenkbaren Befestigung der Strebe 23b ausgebildet. Der Befestigungsfortsatz 28a bildet mit der Strebe 23a ein Schwenkgelenk G6a mit einer Schwenkachse a6, der Befestigungsfortsatz 28b bildet mit der Strebe 23b ein Schwenkgelenk G6b mit der gleichen Schwenkachse a6. Die Streben 23a und 23b können mittels der Schwenkgelenke G6a und G6b relativ zu dem Lenker 17 in Richtung q1, q2 geschwenkt werden. Der Lagerarm 26 ist in einem stumpfen Winkel zu dem Endbereich 34 des Lenkers 17 angeordnet. Der Lenker 17 erstreckt sich von dem Achselement 24 auf einer Rückseite 43 des Basisteils 14 und umgreift einen unteren Endbereich 39 des Basisteils 14.

Zur Rastarretierung des Polsterkörpers 11 in unterschiedlichen Positionen weist die oben erwähnte Sperrvorrichtung S eine Schwenkraste 29 auf (siehe z.B. Fig. 8), welche auf dem Achselement 24 um die Schwenkachse a2 in die Schwenkrichtungen u1 und u2 schwenkbar an dem Basisteil 14 gelagert ist. Die Schwenkraste 29 ist in nicht dargestellter Weise von einer Rückstellkraft in Schwenkrichtung u1 in die Sperrposition belastet. Durch Betätigung der Taste 13, die Bestandteil einer Betätigungsvorrichtung der Sperrvorrichtung S ist, kann die Schwenkraste 29 aus der dargestellten Sperrposition durch eine Bewegung in Richtung u2 in die nicht dargestellte Löseposition geschwenkt werden.

Die Betätigung der Schwenkraste 29 durch die Taste 13 erfolgt mittelbar über eine Hebelbrücke 35. Die Hebelbrücke 35 ist in die Schwenkrichtungen w1 und w2 schwenkbar an dem Polsterkörper 11 gelagert und als einarmiger Hebel ausgebildet. Ein freier Endbereich 36 der Hebelbrücke 35 steht in jeder Position des Polsterkörpers 11 in Kontakt mit der Schwenkraste 29. Die Hebelbrücke 35 ist von der Schwenkraste 29 rückstellbelastet und wird bei Betätigung durch die Taste 13 in Schwenkrichtung w2 verschwenkt, wobei sie die Schwenkraste 29 entgegen ihrer Rückstellbelastung in Richtung u2 in die Löseposition bewegt. Bei gelöster Taste 13 kann sich die Schwenkraste 29, von der Rückstellkraft veranlasst, in Richtung u1 in die Sperrposition zurückbewegen und bewegt dabei die Hebelbrücke 35 in Schwenkrichtung w1.

Die Schwenkraste 29 weist, wie z.B. in Fig. 5 zu sehen, eine Verzahnung 30a auf, die mit der Verzahnung 21a des Lenkers 16a zusammenwirkt, sowie eine Verzahnung 30b, die mit der Verzahnung 21b des Lenkers 16b zusammenwirkt.

In der Sperrposition befindet sich die Verzahnung 30a in Eingriff mit der Verzahnung 21a und die Verzahnung 30b in Eingriff mit der Verzahnung 21b. In der Löseposition der Schwenkraste 29 befinden sich die Verzahnungen 30a und 30b mit den Verzahnungen 21a und 21b außer Eingriff.

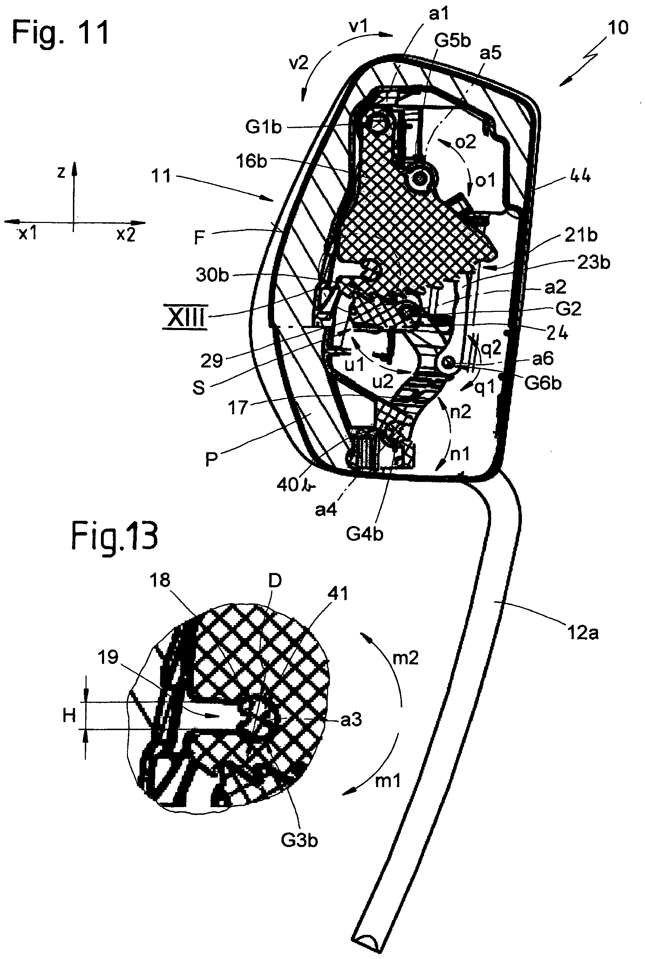

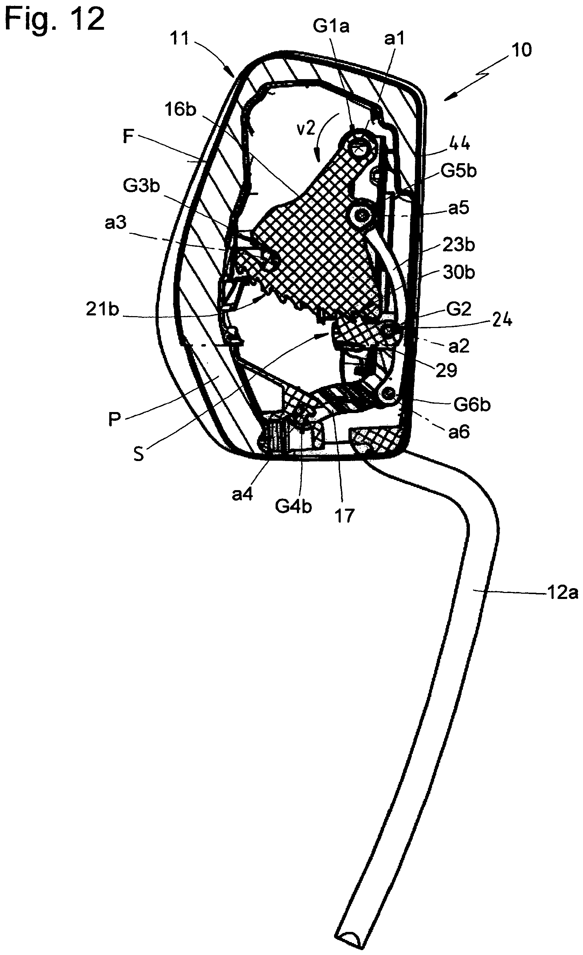

Die Verzahnungen 30a und 30b der Schwenkraste 29 bilden mit den Verzahnungen 21a und 21b der oberen Lenker 16a und 16b ein Form- Richtgesperre. In der in Fig. 11 dargestellten Sperrposition der Sperrvorrichtung S sind die Lenker 16a und 16b und damit das gesamte Koppelgetriebe aus der Grundposition nach vorne in Richtung v1 schwenkbar. Ein Zurückbewegen der Lenker 16a und 16b z.B. aus der in Fig. 12 dargestellten Endposition in Richtung v2 wird jedoch von der Sperrvorrichtung S verhindert, wenn sie sich in der Sperrposition befindet.

Durch Betätigen der Taste 13 wird die Schwenkraste 29 entgegen ihrer Federbelastung aus dem Eingriff mit der Verzahnung 21 bewegt. Im Anschluss kann der Polsterkörper 11 in Richtung x2 der Grundposition zurückbewegt werden. Sobald die Taste 13 wieder freigegeben wird, bewegt sich die Schwenkraste 29 in den Eingriff mit den oberen Lenkern 16.

Gemäß der Fig. 11 und 13 ist der an dem Polsterträger 37 befestigte Achsbereich 41 in dem Lagersitz 18 des Lenkers 16b und in entsprechender, in den Fig. 11 und 13 nicht dargestellter Weise in dem Lagersitz 18 des Lenkers 16a schwenkbar gelagert. Der Achsbereich 41 bildet mit dem Lenker 16a ein Schwenkgelenk G3a mit der Schwenkachse a3 und mit dem Lenker 16b ein Schwenkgelenk G3b mit der gleichen Schwenkachse a3. Der Achsbereich 41 verbindet die Lenker 16a und 16b. Der Polsterkörper 11 ist auf diese Weise relativ zu den Lenkern 16a, 16b um die Schwenkachse a4 in Schwenkrichtungen m1,m2 schwenkbar.

Die Achsabschnitte 27a und 27b des unteren Lenkers 17 (in den Fig. 11 und 12 ist lediglich der Achsabschnitt 27a dargestellt) bilden einen Lagersitz für die komplementär ausgebildeten an dem Polsterträger 37 ausgebildeten Lageraufnahmen 40a und 40b. Der Achsabschnitt 27a bildet mit der Lageraufnahme 40a ein Schwenkgelenk G4a (lediglich andeutungsweise in Fig. 7 dargestellt), der Achsabschnitt 27b bildet mit der Lageraufnahme 40b ein Schwenkgelenk G4b. Die Schwenkgelenke G4a und G4b weisen dieselbe Schwenkachse a4 auf.

Gemäß Fig. 13 weist die Öffnung 19 eine Höhe H auf, die geringer ist, als der Durchmesser D des Lagersitzes 18 und dem Außendurchmesser des Achsbereichs 41, der etwa dem Durchmesser D entspricht. Der Achsbereich 41 ist mit beidseitig ausgebildeten zueinander parallelen seitlichen Abflachungen versehen, deren Außenflächen einen Abstand aufweisen, der etwa der Höhe H entspricht oder etwas geringer ist. Die Lenker 16a und 16b können zur Montage des Polsterkörpers 11 bezüglich der in Fig. 11 dargestellten Position in eine um etwa 90° verschwenkte Position bewegt werden. Der Achsbereich 41 ist dann durch die Öffnungen 19 in den Lagersitzen 18 der Lenker 16a und 16b auf einfache Weise montierbar. Ein Riegel verhindert bei der fertig montierten Kopfstütze eine Bewegung der Lenker 16a und 16b in die Montageposition. In entsprechender Weise werden die Achsabschnitte 27a und 27b in den Lageraufnahmen 40a und 40b montiert.

Die Schwenkachsen a1, a2, a3, a4, a5 und a6 sind parallel zueinander und parallel zu einer in Fig. 4 dargestellten y-Achse angeordnet. Die Schwenkachsen a1 und a2 sind in z-Richtung voneinander beabstandet. Die Lenker 16a und 16b, der Lenker 17, das Basisteil 14 und der Polsterträger 37 bilden ein Koppelgetriebe. Jeder Lenker 16a und 16b bildet mit dem Lenker 17, dem Basisteil 14 und dem Polsterträger 37 ein Viergelenk, welches Teil des Koppelgetriebes ist.

Der Lenker 16b ist mittels der Strebe 23b mit dem unteren Lenker 17 schwenkbar verbunden. Analog dazu ist der Lenker 16a (in den Fig. 11 und 12 nicht dargestellt - siehe z.B. Fig. 8) mittels der Strebe 23a mit dem unteren Lenker 17 schwenkbar verbunden.

Der Lenker 16a, die Strebe 23a, das Basisteil 14 und der Lenker 17 bilden ein Viergelenk, welches Teil des Koppelgetriebes ist. Der Lenker 16b, die Strebe 23b, das Basisteil 14 und der Lenker 17 bilden darüber hinaus ein Viergelenk, welches ebenfalls Teil des Koppelgetriebes ist. Jeder Schwenkposition der Lenker 16a und 16b sowie des Lenkers 17 relativ zu dem Basisteil 14 ist eine bestimmte Position des Polsterkörpers 11 zugeordnet.

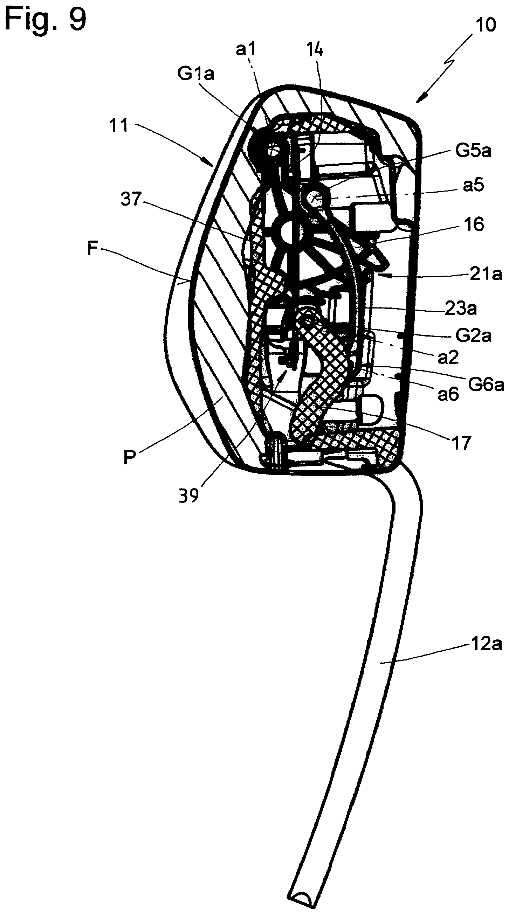

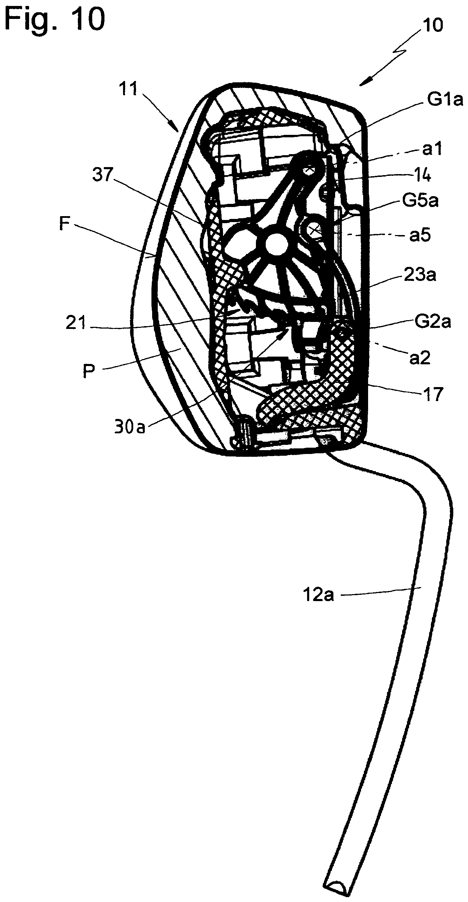

Gemäß der Fig. 9 und 11a ist der Polsterkörper 11, der einen Teil des Koppelgetriebes bildet, in der Grundposition angeordnet. Die Fig. 10 und 12 zeigen den Polsterkörper 11 in der Endposition, in welcher die Lenker 16a, 16b in Richtung v1 um die Schwenkachse a1 und der Lenker 17 in Richtung u1 um die Schwenkachse a2 um einen bestimmten Winkel bezüglich der Grundposition des Polsterkörpers 11 geschwenkt sind. Durch eine Bewegung der Sperrvorrichtung S in die Löseposition kann der Polsterkörper 11 aus der Endposition in die Grundposition oder in Zwischenpositionen zurückbewegt werden, wobei in der Grundposition die Lenker 16a, 16 b in Richtung v2 und der Lenker 17 in Richtung u2 bezüglich der Endposition des Polsterkörpers 11 geschwenkt sind.

Kräfte, die beim Auftreffen des Kopfes auf die Kopfanlagefläche F auf den Polsterkörper 11 aufgebracht werden, können über das Koppelgetriebe auf das Basisteil 14 übertragen werden. Von dem Polsterträger 37 werden Kräfte sowohl auf die Lenker 16a und 16b, als auch auf den Lenker 17 übertragen. Während von den Lenkern 16a und 16b sowohl über das Gelenk G1, als auch an dem Endbereich 20 über die Schwenkraste 29 der Sperrvorrichtung S Kräfte auf den Basisteil 14 übertragen werden können, ist bei dem Lenker 17 eine Kraftübertragung über eine Sperrvorrichtung nicht möglich. Von dem Lenker 17 kann eine Kraft über das Schwenkgelenk G2 in das Basisteil 14 eingeleitet werden. Mittels der erfindungsgemäßen Streben 23a, 23b können zusätzlich Kräfte zwischen dem unteren Lenker 17 und den oberen Lenkern 16a und 16b übertragen werden. Ferner ermöglichen die Streben 23a und 23b z.B. eine Aufteilung der Belastung von dem Lenker 17 auf die beiden Lenker 16a und 16b.

Eine auf den Polsterträger 37 wirkende Kraft verursacht in den Lenkern 16a und 16b ein erstes Moment um die Schwenkachse a1 in Richtung v2 und in dem Lenker 17 ein Moment um die Schwenkachse a2 in Richtung u2. Auf die Lenker 16a, 16b wirkende Kräfte können sowohl über die G1a und G1b, als auch über die Verzahnungen 21a und 21b auf das Basisteil 14 übertragen werden, wenn sich die Sperrvorrichtung S in der Sperrposition befindet. Eine auf den Lenker 17 wirkende Kraft kann z.B. hälftig über die Strebe 23a auf den Lenker 16a und hälftig über die Strebe 23b auf den Lenker 16b übertragen werden. Die von dem Lenker 17 mittels der Streben 23a und 23b auf die Lenker 16a und 16b übertragene Kraft verursacht in den Lenkern 16a und 16b ein zweites Moment um die Schwenkachse a1 in Richtung v1, welches dem ersten Moment entgegen wirkt.

Aufgrund der Möglichkeit der Übertragung von Kräften mittels der Streben 23a und 23b kann somit eine Überlastung von Teilen des Koppelgetriebes sowie eine Überlastung der Sperrvorrichtung S verhindert werden.

## Patentansprüche

1. Kopfstütze für Fahrzeugsitze mit einem eine Kopfanlagefläche (F) aufweisenden Polsterträger (37), welcher relativ zu einem Basisteil (14) zwischen einer Grundposition und einer Endposition bewegbar ausgebildet ist, wobei der Polsterträger (37) einem ersten Verbindungselement (37) eines Koppelgetriebes zugeordnet ist, wobei das erste Verbindungselement (37) mit wenigstens einem um eine erste Schwenkachse (a1) schwenkbaren ersten Lenker (16a, 16b) und wenigstens einem um eine zweite Schwenkachse (a2) schwenkbaren zweiten Lenker (17) ein erstes Viergelenk ausbildend an dem Basisteil (14) gelagert ist, wobei das Koppelgetriebe mindestens ein zweites Verbindungselement (23a, 23b) umfasst welches mit dem ersten Lenker (16a, 16b) und mit dem zweiten Lenker (17) ein zweites Viergelenk bildend schwenkbar verbunden ist, wobei eine Bewegung des ersten Verbindungselements (37) aus der eingestellten Position mittels einer zwischen einer Sperrposition und einer Löseposition bewegbaren Sperrvorrichtung (S) in wenigstens eine Bewegungsrichtung (x2) verhinderbar ist, wobei die Sperrvorrichtung (S) dem Basisteil (14) zugeordnete erste Sperrmittel (30) umfasst, welche lösbar in Eingriff mit zweiten Sperrmitteln (21a, 21b) bewegbar sind, **dadurch gekennzeichnet, dass** die zweiten Sperrmittel an dem ersten Lenker und / oder an dem zweiten Lenker entlang einer von der Schwenkachse beabstandeten Kreisbahn mit der Schwenkachse als Kreisradius ausgebildet sind.

2. Kopfstütze nach Anspruch 1, **dadurch gekennzeichnet, dass** die Sperrvorrichtung (S) von einem Form- Richtgesperre gebildet ist.

3. Kopfstütze nach einem der Ansprüche 1 oder 2, **dadurch gekennzeichnet, dass** die zweiten Sperrmitteln (21a, 21 einem relativ zu dem Basisteil (14) bewegbaren Teil (16a, 16b) des Koppelgetriebes zugeordnet sind.

4. Kopfstütze nach Anspruch 3, **dadurch gekennzeichnet, dass** die zweiten Sperrmittel (21a, 21b) dem ersten Lenker (16a, 16b) zugeordnet sind.

5. Kopfstütze nach einem der vorangehenden Ansprüche, **dadurch gekennzeichnet, dass** die Sperrvorrichtung (S, 21a, 21b, 29, 30a, 30b) eine Betätigungsvorrichtung (13, 35) umfasst, mittels welcher die Sperrvorrichtung (S) zwischen der Sperrposition und der Löseposition bewegbar ist.

6. Kopfstütze nach Anspruch 5, **dadurch gekennzeichnet, dass** die Betätigungsvorrichtung (13, 35) eine Übertragungsvorrichtung (35) aufweist, mittels welcher eine Bewegung eines dem Polsterträger (37) zugeordneten Bedienelements (13) auf die ersten Sperrmittel oder die zweiten Sperrmittel (29) in jeder Position des Polsterträgers (37) übertragbar ist, um die Sperrvorrichtung (S) zwischen der Sperrposition und der Löseposition zu verstellen.

7. Kopfstütze nach Anspruch 1, **dadurch gekennzeichnet, dass** das Basisteil (14) wenigstens eine Aussparung (38a, 38b) aufweist, welche von wenigstens einem Teilbereich des ersten Lenkers (16a, 16b) und / oder des zweiten Lenkers (17) durchgreifbar ist.

8. Kopfstütze nach Anspruch 7, **dadurch gekennzeichnet, dass** das Basisteil (14) als Metallteil, insbesondere als Stanz- Biegeteil ausgebildet ist.

9. Kopfstütze nach einem der vorangehenden Ansprüche, **dadurch gekennzeichnet, dass** der erste Lenker (16a, 16b) und / oder der zweite Lenker etwa kreissektorförmig ausgebildet sind.

## Claims

1. Head support for vehicle seats with a cushion carrier (37) having a head contact surface (F), which is formed movably relative to a base part (14) between a base position and an end position, whereby the cushion carrier (37) is assigned to a first connecting element (37) of a linkage, whereby the first connecting element (37) is mounted with at least one first guide arm (16a, 16b) pivotable about a first pivot axis (a1) and at least one second guide arm (17) pivotable about a second pivot axis (a2) forming a first four-bar linkage on the base part (14), whereby the linkage comprises at least one second connecting element (23a, 23b) which is pivotably connected with the first guide arm (16a, 16b) and with the second guide arm (17) forming a second four-bar linkage, whereby a movement of the first connecting element (37) from the set position is preventable by means of a locking device (S) movable between a lock position and a release position in at least one direction of movement (x2), whereby the locking device (S) comprises first locking means (30) assigned to the base part (14) which are movable releasably in engagement with second locking means (21a, 21b), **characterised in that** the second locking means are formed on the first guide arm and/or on the second guide arm along a circular path spaced away from the pivot axis with the pivot axis as a circular radius.

2. Head support according to Claim 1, **characterised in that** the locking device (S) is formed by a shaped directional locking mechanism.

3. Head support according to one of Claims 1 or 2, **characterised in that** the second locking means (21a, 21b) are assigned to a part (16a, 16b) of the linkage movable relative to the base part (14).

4. Head support according to Claim 3, **characterised in that** the second locking means (21a, 21b) are assigned to the first guide arm (16a, 16b).

5. Head support according to one of the preceding claims, **characterised in that** the locking device (S, 21a, 21b, 29, 30a, 30b) comprises an actuating device (13, 35), by means of which the locking device (S) is movable between the lock position and the release position.

6. Head support according to Claim 5, **characterised in that** the actuating device (13, 35) has a transmission device (35) by means of which a movement of an operating element (13) assigned to the cushion carrier (37) is transmissible to the first locking means or the second locking means (29) in any position of the cushion carrier (37) in order to adjust the locking device (S) between the lock position and the release position.

7. Head support according to Claim 1, **characterised in that** the base part (14) has at least one recess (38a, 38b) which can be reached through by at least a part of the first guide arm (16a, 16b) and/or of the second guide arm (17).

8. Head support according to Claim 7, **characterised in that** the base part (14) is formed as a metal part, in particular as a punched-bent part.

9. Head support according to one of the preceding claims, **characterised in that** the first guide arm (16a, 16b) and/or the second guide arm is formed approximately in the shape of a circular sector.

## Revendications

1. Appui-tête pour des sièges de véhicule automobile comportant un support rembourré (37) présentant une surface de support de tête (F), ledit support étant réalisé mobile entre une position de base et une position d'extrémité par rapport à une pièce de base (14), ledit support rembourré (37) étant associé à un premier élément de liaison (37) d'un entraînement de couplage, le premier élément de liaison (37) comportant au moins un premier élément d'articulation (16a, 16b) basculant autour d'un premier axe de basculement (a1) et au moins un deuxième élément d'articulation (17) basculant autour d'un deuxième axe de basculement (a2) pour former un premier quadrilatère articulé au niveau de la pièce de base (14), l'entraînement de couplage comprenant au moins un deuxième élément de liaison (23a, 23b) qui est lié avec le premier élément d'articulation (16a, 16b) et avec le deuxième élément d'articulation (17) pour former un deuxième quadrilatère articulé, un mouvement du premier élément de liaison (37) pouvant être évité depuis la position réglée au moyen d'un dispositif de blocage (S) mobile entre une position de blocage et une position de libération dans au moins une direction de déplacement (x2), le dispositif de blocage (S) comprenant des premiers moyens de blocage associés à la pièce de base (14) qui peuvent être déplacés de façon libérable en prise avec des deuxièmes moyens de blocage (21a, 21b), **caractérisé en ce que** les deuxièmes moyens de blocage sont réalisés au niveau du premier élément d'articulation et/ou au niveau du deuxième élément d'articulation, le long d'une trajectoire circulaire espacée de l'axe de basculement avec l'axe de basculement en tant que rayon du cercle.

2. Appui-tête selon la revendication 1, **caractérisé en ce que** le dispositif de blocage (S) est formé par un couplage à glissière à sens unique.

3. Appui-tête selon l'une des revendications 1 ou 2, **caractérisé en ce que** les deuxièmes moyens de blocage (21a, 21b) sont associés à une pièce (16a, 16b) pouvant être déplacée par rapport à la pièce de base (14) de l'entrainement de couplage.

4. Appui-tête selon la revendication 3, **caractérisé en ce que** les deuxièmes moyens de blocage (21a, 21b) sont associés au premier élément d'articulation (16a, 16b).

5. Appui-tête selon l'une des précédentes revendications, **caractérisé en ce que** le dispositif de blocage (S, 21a, 21b, 29, 30a, 30b) comprend un dispositif d'actionnement (13, 35) avec lequel le dispositif de blocage (S) peut être déplacé entre la position de blocage et la position de libération.

6. Appui-tête selon la revendication 5, **caractérisé en ce que** le dispositif d'actionnement (13, 35) comporte un dispositif de transmission (35) avec lequel un déplacement d'un élément de commande (13) associé au support rembourré (37) peut être transmis aux premiers éléments de blocage ou aux deuxièmes éléments de blocage (29) dans chaque position du support rembourré (37) afin de régler le dispositif de blocage (S) entre la position de blocage et la position de libération.

7. Appui-tête selon la revendication 1, **caractérisé en ce que** la pièce de base (14) comporte au moins un évidement (38a, 38b) qui peut être traversé par au moins un segment du premier élément d'articulation (16a, 16b) et/ou du deuxième élément d'articulation (17).

8. Appui-tête selon la revendication 7, **caractérisé en ce que** la pièce de base (14) est réalisée en tant que pièce de métal, en particulier en tant que pièce pliée-découpée.

9. Appui-tête selon l'une des précédentes revendications, **caractérisé en ce que** le premier élément d'articulation (16a, 16b) et/ou le deuxième élément d'articulation est/sont réalisé(s) à peu près en forme de secteur de cercle (17).
